Europäisches Patentamt

(19) European Patent Office

Office européen des brevets

(11) Numéro de publication: **0 001 376**
**B1**

(12) **FASCICULE DE BREVET EUROPEEN**

(21) Numéro de dépôt: **78810015.4**

(22) Date de dépôt: **07.09.78**

(51) Int. Cl.³: **B 65 G  17/02,**  B 66 B  9/12

(54) Convoyeur-élévateur

(30) Priorité: **15.09.77 CH 11271/77**

(43) Date de publication de la demande:
**04.04.79 Bulletin 79/07**

(45) Mention de la délivrance du brevet:
**01.10.80 Bulletin 80/20**

(84) Etats contractants désignés:
**BE DE GB SE**

(56) Documents cités:
**DE - A - 1 807 135**
**DE - C - 118 374**
**FR - 1 378 871**
**FR - A - 2 192 963**
**GB - A - 1 046 633**
**US - A - 2 695 094**
**US - A - 3 115 846**

(73) Titulaire: **PRODUITS FINDUS S.A.**
**Case postale 66**
**CH - 1800 Vevey (CH)**

(72) Inventeur: **Joensson, Kurt Ove Goeran**
**Varagatan 13**
**Bjuv (SE)**

(74) Mandataire: **Sordet, Christian**
**55, avenue Nestlé**
**CH - 1800 Vevey (CH)**

Courier Press, Leamington Spa, England.

Convoyeur-élévateur

La présente invention concerne un convoyeur-élévateur particulièrement destiné à transporter des objets dans une direction inclinée par rapport à l'horizontale.

On connaît les rubans transporteurs qui remplissent cette fonction. Toutefois, leur inclinaison est limitée, surtout si les objets à transporter sont glissants. On peut obvier dans une certaine mesure à cette difficulté en fixant sur le ruban des traverses, mais alors, il n'est plus possible de nettoyer la surface du ruban au moyen d'un organe râcleur.

Le brevet DE - C - 118.374 (Dodge) décrit un convoyeur-élévateur en forme d'escalier. Celui-ci comporte un organe flexible sans fin passant sur des poulies d'extrémité et pourvu de goupilles alternativement courtes et longues. L'appareil comporte encore une paire de glissières inférieures et une paire de glissières supérieures inclinées. Seules les goupilles les plus longues peuvent s'engager dans les rainures des glissières inférieures, les plus courtes s'engageant dans les rainures des glissières supérieures; les goupilles sont ainsi distribuées alternativement en haut et en bas, donnant à l'organe flexible la forme d'un escalier.

Un tel dispositif présente de nombreuses sources de frottement et de coincement qui nécessitent une surveillance et un entretien constant. Malgré son âge (1899), il ne semble pas que ce dispositif ait fait l'objet d'applications pratiques. Le brevet US - A - 3.115.846 (Dehne) décrit un dispositif de transport dans lequel un rail est subdivisé en deux dans la partie inclinée. Chaque rail de la partie inclinée est décalé dans le plan horizontal et dans le plan vertical par rapport à l'autre. A chaque extrémité de cette partie inclinée se trouve un aiguillage à axe vertical. Celui-ci est conformé de telle sorte qu'il dirige latéralement sur l'un des rails le galet qui se présente à l'aiguillage, mais que le passage de ce galet fait changer l'aiguillage de position. A l'arrivée du galet suivant, celui-ci est donc dirigé latéralement sur l'autre rail et ainsi de suite.

Le convoyeur-élévateur selon l'invention comporte un ruban passant sur au moins une paire de poulies d'extrémité et solidaire de galets roulant sur au moins une paire de rails qui présentent chacun un tronçon incliné entre deux tronçons sensiblement horizontaux. Il est caractérisé par le fait que chaque rail s'épanouit entre le tronçon horizontal inférieur et le tronçon incliné et se rétrécit entre le tronçon incliné et le tronçon horizontal supérieur, que chaque tronçon horizontal comprend un aiguillage basculant de forme essentiellement triangulaire dont la pointe détermine une extrémité de chaque tronçon horizontal et apte à pivoter sur un axe horizontal au passage des galets, de sorte que les galets en se déplaçant passent alternativement dessus et dessous le rail, et que le ruban est doublé d'au moins une paire de chaînes solidaires de barres rondes en nombre pair, portant les galets à leurs extrémités, une barre sur deux étant entourée d'un tube solidaire du ruban.

Le dessin annexé représente, à titre d'exemple, une forme d'exécution de l'invention.

La figure 1 est un profil schématique du convoyeur-élévateur.

La figure 2 représente un détail d'exécution.

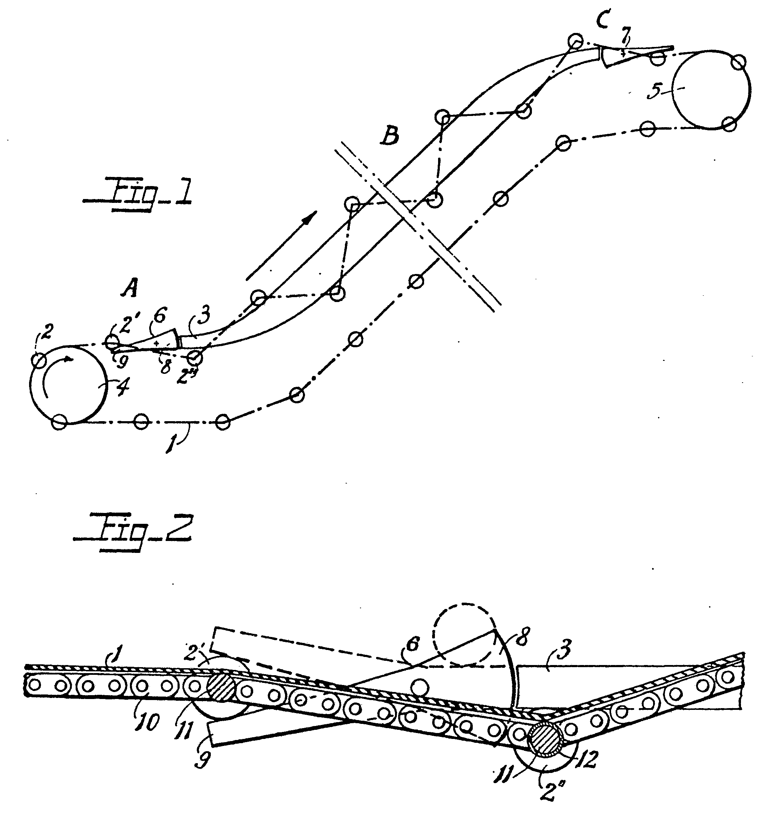

Au dessin (figure 1) le convoyeur-élévateur comporte un ruban transporteur 1 analogue à une courroie et passant sur des poulies d'extrémité 4,5 dont l'une au moins entraîne le ruban, et solidaire de galets 2, 2', 2''. Des rails 3 comportent deux tronçons horizontaux A et C entre lesquels se trouve un tronçon incliné B. Le tronçon horizontal A comprend un aiguillage basculant 6 et le tronçon horizontal C comprend un aiguillage basculant 7 analogue, disposé dans le sens contraire du précédent. Chaque aiguillage comporte une partie épaisse 8 et une pointe 9.

Le fonctionnement du dispositif est le suivant: Le ruban 1 allant dans le sens de la flèche, le galet 2' passe au dessus de l'aiguillage basculant 6 et continuera à rouler sur la face supérieure du rail 3 sur le tronçon incliné B. Dès que le galet 2' atteint la partie épaisse 8 de l'aiguillage, il fait basculer cette partie épaisse vers le bas, la pointe 9 basculant vers le haut. De la sorte, lorsque le galet 2 se présentera à son tour devant l'aiguillage 6, il passera sous la pointe 9 et continuera à rouler sous la partie inclinée du rail 3, comme le fait le galet 2''. Au passage sous la partie épaisse 8 de l'aiguillage, le galet 2 lèvera celle-ci et abaissera la pointe 9, et ainsi de suite. On pourrait appeler l'aiguillage basculant 6 un "flip-flop mécanique".

L'opération inverse s'opère lorsque les galets parviennent à l'aiguillage 7.

Sur le tronçon incliné B des rails, le ruban 1 prend ainsi une forme d'escalier et des objets posés sur le ruban sont transportés horizontalement même si les rails sont fortement inclinés.

Le ruban transporteur 1 est doublé d'une paire de chaînes 10. Celles-ci sont solidaires de barres rondes 11 portant les galets à leurs extrémités et une barre sur deux est entourée par un tube 12 fixé au ruban 1. On comprend que si le nombre de barres 11 est pair, les barres entourées de tubes 12 passeront toujours sous le rail 3 et les barres sans tube sur le rail. De cette manière, le ruban 1 fléchit toujours dans le même sens, ce qui diminue sa fatigue.

Le ruban présentant une forme ronde et lisse lorsqu'il passe sur les poulies d'extrémité 4, 5, il est loisible de prévoir un organe râclant la surface pour le nettoyer. Ce râcleur est mobile radialement par rapport à l'axe de poulie, afin de suivre les différences de diamètre causées par le passage des barres 11 par dessus la poulie.

Il est clair si le ruban va dans le sens contraire de la flèche (figure 1), l'appareil peut servir à descendre des objets au lieu de les monter.

## Revendication

Convoyeur-élévateur comportant un ruban (1) passant sur au moins une paire de poulies d'extrémité (4,5) et solidaire de galets (2,2') roulant sur au moins une paire de rails (3) qui présentent chacun un tronçon incliné (B) entre deux tronçons sensiblement horizontaux (A,C), caractérisé par le fait que chaque rail s'épanouit entre le tronçon horizontal inférieur (A) et le tronçon incliné (B) et se rétrécit entre le tronçon incliné (B) et le tronçon horizontal supérieur (C), que chaque tronçon horizontal comprend un aiguillage basculant de forme essentiellement triangulaire dont la pointe détermine une extrémité de chaque tronçon horizontal et apte à pivoter sur un axe horizontal au passage des galets, de sorte que les galets en se déplaçant passent alternativement dessus et dessous le rail (3), et que le ruban (1) est doublé d'au moins une paire de chaînes (10) solidaires de barres rondes (11) en nombre pair, portant les galets à leurs extrémités, une barre sur deux étant entourée d'un tube (12) solidaire du ruban.

## Patentanspruch

Transport- und Hebeförderer mit einem Band (1), das um mindestens ein Paar von Umlenkrollen (4,5) umläuft und mit Laufrollen (2,2') verbunden ist, die auf mindestens einem Paar Schienen (3) rollen, welche jede einen geneigten Teil (B) zwischen zwei im wesentlichen waagerechten Teilen (A,C) aufweisen, dadurch gekennzeichnet, dass jede Schiene sich zwischen dem waagerechten unteren Teil (A) und dem geneigten Teil (B) aufweitet und zwischen dem geneigten Teil (B) und dem waagerechten oberen Teil (C) verschmälert, dass jeder waagerechte Teil eine kippende Weiche von grundsätzlich dreieckiger Form aufweist, deren Spitze das Ende von jeden waagerechten Teil bestimmt und die beim Durchgang der Laufrollen um eine waagerechte Achse kippen können, so dass die Laufrollen beim Vorüberfahren wechselweise über und unter der Schiene (3) rollen, und dass das Band (1) mit mindestens ein Paar Ketten (10) gekoppelt ist, die an runden Stangen (11) befestigt sind, welche in gerader Zahl vorhanden sind und an ihren Enden die Laufrollen tragen, wobei eine von je zwei Stangen von einem am Band befestigten Rohr umgeben ist.

## Claim

Conveyor-elevator comprising a band (1) passing over at least one pair of end pulleys (4,5) and to which are attached rollers (2,2') rolling on at least one pair of rails (3) which each comprise an inclined portion (B) between two essentially horizontal portions (A,C), characterised by the fact that each rail is widened between the horizontal lower portion (A) and the inclined portion (B) and is narrowed between the inclined portion (B) and the horizontal upper portion C, that each horizontal portion comprises a tilting switch of essentially triangular shape the point of which determines an end of each horizontal portion and adapted to pivot on a horizontal axis during the passage of the rollers, in order that the rollers in motion pass alternatively above and below the rail (3), and that the band (1) is coupled to at least one pair of chains (10) attached to round bars (11) in even number, carrying the rolls at their end, one bar out of two being enclosed in a tube (12) fixed to the band.

_Fig_1_

_Fig_2_